# EUROPÄISCHE PATENTSCHRIFT

(11) **EP 3 801 862 B1**
(45) Veröffentlichungstag und Bekanntmachung des Hinweises auf die Patenterteilung: **01.12.2021**
(21) Anmeldenummer: 19725709.0
(22) Anmeldetag: 20.05.2019
(51) Int. Cl.: B01J 2/16, B01J 8/08, B01J 2/20, B01J 8/00, B65G 53/18

(54) **VORRICHTUNG UND VERFAHREN ZUR HERSTELLUNG UND BEHANDLUNG VON GRANULAT MIT EINEM ADAPTERSTUTZEN ZUR VERBINDUNG EINES EIN GRANULAT ERZEUGENDEN GRANULATORS UND EINES FLUIDISIERUNGSAPPARATES**
DEVICE AND METHOD FOR PRODUCING AND TREATING GRANULATE WITH AN ADAPTER CONNECTING PIECE FOR CONNECTING A GRANULATOR WHICH GENERATES A GRANULATE AND A FLUIDIZING DEVICE
DISPOSITIF ET PROCÉDÉ DE FABRICATION ET DE TRAITEMENT DE GRANULÉS AVEC EMBOUTS D'ADAPTATEUR SERVANT À RELIER UN GRANULATEUR PRODUISANT DES GRANULÉS ET UN APPAREIL DE FLUIDISATION

(30) Priorität: 06.06.2018 DE 102018208930
(43) Veröffentlichungstag der Anmeldung: 14.04.2021
(73) Patentinhaber: GLATT GMBH, 79589 Binzen (DE)
(72) Erfinder: THIES, Jochen, 79540 Lörrach (DE); ZIMMERMANN, Dirk, 79664 Wehr (DE); KNÖPFLE, Xaver, 79395 Neuenburg (DE)
(74) Vertreter: Patentanwälte Magenbauer & Kollegen Partnerschaft mbB
(86) Internationale Anmeldenummer: PCT/EP2019/062946
(87) Internationale Veröffentlichungsnummer: WO 2019/233746

(56) Entgegenhaltungen:
- CN-U- 203 061 148
- DE-A1- 1 556 091
- DE-A1-102004 038 003
- DE-A1-102013 005 921
- DE-A1-102014 202 236
- DE-U1-202010 005 876
- JP-B2- 3 417 669
- US-A1- 2008 203 200

## Beschreibung

Die Erfindung betrifft eine Vorrichtung zur Herstellung und Behandlung von Granulat umfassend einen das Granulat erzeugenden Granulator mit einem Auslass für das erzeugte Granulat, einen das durch den Granulator erzeugte Granulat behandelnden Fluidisierungsapparat mit einem Einlass für das zu behandelnde Granulat und einen von Prozessluft durchströmbaren Anströmboden, wobei der Granulator mit dem Einlass für das zu behandelnde Granulat des Fluidisierungsapparates derart verbunden ist, dass der Auslass des Granulators an den Anströmboden angrenzt oder oberhalb des Anströmbodens angeordnet ist.

Zudem betrifft die Erfindung ein Verfahren zur Herstellung und Behandlung von Granulat umfassend einen das Granulat erzeugenden Granulator mit einem Auslass für das erzeugte Granulat, einen das durch den Granulator erzeugte Granulat behandelnden Fluidisierungsapparat mit einem Einlass für das zu behandelnde Granulat und einen von Prozessluft durchströmbaren Anströmboden, wobei der Granulator mit dem Einlass für das zu behandelnde Granulat des Fluidisierungsapparates derart verbunden ist, dass der Auslass des Granulators an den Anströmboden angrenzt oder oberhalb des Anströmbodens angeordnet ist.

Die Patentschrift DE 10 2013 102 133 B4 offenbart einen Wirbelschicht-Trockner für pharmazeutisches Granulat, mit mehreren Trocknungskammern, die ringförmig um eine Mittelachse angeordnet und um die Mittelachse drehbar gelagert sind, wobei jede Trocknungskammer einen durchbrochenen Boden als Lufteinlass für Trocknungsluft aufweist, sowie einen Luftauslass, sowie eine Befüllöffnung und eine Entleerungsöffnung für das Granulat, und mit einem Zuluftkanal, welcher die Trocknungsluft in die Trocknungskammer führt, sowie einem Abluftkanal, welcher die aus der Trocknungskammer gelangte Trocknungsluft führt, wobei für die Granulatführung dezentral ein Füllkanal ortsfest angeordnet ist, derart, dass jede Trocknungskammer mit ihrer Befüllöffnung in eine an den Füllkanal anschließende Füllposition drehbar ist, und die Entleerungsöffnung jeder Trocknungskammer ebenfalls dezentral angeordnet ist. Hierbei wird der die Trocknungskammer mit Granulat versorgende Granulatstrom im Wesentlichen schwerkraftgetrieben von oben nach unten geführt. Ein Füllkanal, der bspw. an einen Zwischenspeicher angeschlossen ist, dient dazu, dass die noch nicht getrockneten Granulat-Rohlinge aus diesem Zwischenspeicher über den Füllkanal und einen Granulatstutzen in die Trocknertrommel gelangen können.

In der europäischen Patentschrift EP 2 134 458 B1 wird eine kontinuierlich arbeitende Gratulations- und Trocknungsvorrichtung mit Messeinheiten und Verfahren zur kontinuierlichen Gratulation und Trocknung beschrieben. Die Gratulations- und Trocknungsvorrichtung umfasst einen Granulator, bspw. einen Extruder, zur Herstellung des Granulats und einen Fluidisierungsapparat. Das in dem Granulator erzeugte Granulat wird entweder schwerkraftgetrieben von oben nach unten über eine Transportleitung oder durch eine mit Transportluft beaufschlagte Transportleitung zur Nachbehandlung in die Trocknungsvorrichtung gefördert.

Eine andere Möglichkeit zur Förderung der erzeugten Granulate aus einem Granulator in einen Fluidisierungsapparat stellt eine Förderung der erzeugten Granulate im Vakuum dar.

Nachteilig an den im Stand der Technik dargestellten technischen Lösungen zur Förderung des erzeugten, feuchten Granulats vom Granulator in den Fluidisierungsapparat ist, dass das feuchte zur Agglomeration neigende Granulat am Auslass des Granulators, am Einlass des Fluidisierungsapparates und /oder in der den Granulator und den Fluidisierungsapparat verbindenden Förderleitung an der Innenwandung anhaftet bzw. anbackt. Hierdurch wird der Auslass des Granulators, der Einlass des Fluidisierungsapparates und/oder die den Granulator und den Fluidisierungsapparat verbindende Förderleitung verstopft, sodass der Herstellungs- und Behandlungsprozess in der Vorrichtung abzubrechen und die Vorrichtung zu reinigen ist.

In der US 2008/0203200 A1 und der CN 203 061 148 U wird jeweils ein im Wesentlichen kontinuierlicher arbeitender, die in einem vorgeschalteten Granulator erzeugten Granulate trocknender Wirbelschichtapparat offenbart.

Es ist daher die Aufgabe der vorliegenden Erfindung, eine Vorrichtung und ein Verfahren zur Herstellung und Behandlung von Granulat bereitzustellen, wobei eine Agglomeration des Granulats beim Übergang vom Granulator zum Fluidisierungsapparat verhindert bzw. zumindest deutlich reduziert wird.

Diese Aufgabe wird bei einer Vorrichtung zur Herstellung und Behandlung von Granulat der eingangs genannten Art dadurch gelöst, dass der Granulator über einen eine Längsachse A-A aufweisenden Adapterstutzen mit dem Fluidisierungsapparat verbunden ist, wobei der zweiteilig ausgebildete Anströmboden im Adapterstutzen und im Fluidisierungsapparat angeordnet ist, wobei ein erster Teil des Anströmbodens im Fluidisierungsapparat und ein zweiter Teil des Anströmbodens im Adapterstutzen angeordnet ist. Vorteilhafterweise wird durch die Erfindung eine Agglomeration des in dem Granulator erzeugten, feuchten Granulats verhindert oder zumindest deutlich reduziert. Verstopfungen, die durch Agglomeration von Granulaten verursacht werden, bspw. im Auslass des Granulators, einer als Adapterstutzen ausgebildeten Förderleitung des Granulats und/oder am Einlass des Fluidisierungsapparates, werden verhindert oder zumindest deutlich reduziert. Somit ist eine mit einem erheblichen Zeitaufwand sowie einem großen Produktverlust verbundene Prozessunterbrechung zur Reinigung der Vorrichtung, insbesondere des Auslasses des Granulators, einer als Adapterstutzen ausgebildeten Förderleitung des Granulats und/oder des Einlasses des Fluidisierungsapparates, nicht mehr notwendig. Solche Prozessunterbrechungen sind kosten- und zeitintensiv, da zwangsläufig der gesamte Herstellungs- und Behandlungsprozess für das Granulat abgebrochen werden muss und nach der Reinigung die Vorrichtung des Herstellungs- und Behandlungsprozesses erneut anzufahren ist.

Der Anströmboden ist im Fluidisierungsapparat angeordnet oder Teil des Fluidisierungsapparates. Dies hat den Vorteil, dass hierdurch eine sehr kompakte, platzsparende Bauweise der Vorrichtung erreicht wird.

Der das Granulat erzeugende Granulator ist über einen eine Längsachse aufweisenden Adapterstutzen mit dem Fluidisierungsapparat verbunden, wobei der Anströmboden im Adapterstutzen und gegebenenfalls zusätzlich im Fluidisierungsapparat angeordnet. Ein Adapterstutzen hat den Vorteil, dass hierdurch die Anbindung des Granulators an den Fluidisierungsapparat einfacher ist.

Der Anströmboden ist zweiteilig ausgebildet ist, wobei ein erster Teil des Anströmbodens im Fluidisierungsapparat und ein zweiter Teil des Anströmbodens im Adapterstutzen angeordnet ist. Ebenso vorteilhaft ist, dass die Vorrichtung zwei Anströmböden aufweist, wobei der erste Anströmboden im Fluidisierungsapparat und ein zweiter Anströmboden im Adapterstutzen angeordnet ist. Hierdurch ist es möglich den im Fluidisierungsapparat angeordneten ersten Teil des Anströmbodens oder den ersten Anströmboden um eine Mittelachse des Fluidisierungsapparates drehbar auszubilden, sodass bei einem kontinuierlichen Verfahren zur Herstellung und Behandlung von Granulaten eine definierte Verweilzeit für die Granulate während des Behandlungsprozesses im Fluidisierungsapparat einstellbar ist.

Darüber hinaus ist der zweite Teil des Anströmbodens oder der zweite Anströmboden zumindest teilweise im Adapterstutzen angeordnet. Eine solche Anordnung bietet den Vorteil, dass die einzelnen Apparate, nämlich Granulator, Adapterstutzen und Fluidisierungsapparat optimal aufeinander abstimmbar bzw. abgestimmt sind, bspw. in Bezug auf einen in den Adapterstutzen ragenden Auslass des Granulators.

Nach einer zusätzlichen Ausgestaltung der erfindungsgemäßen Vorrichtung unterteilt der zweite Teil des Anströmbodens oder der zweite Anströmboden den Adapterstutzen zumindest teilweise in eine erste Kammer und eine zweite Kammer. Durch diese Unterteilung werden die erzeugten, feuchten Granulate bei Verlassen des Auslasses des Granulators sofort von durch den zweiten Teil des Anströmbodens oder den zweiten Anströmboden strömende Prozessluft fluidisiert und in Richtung des Fluidisierungsapparates gefördert. Durch eine Fluidisierung im Adapterstutzen startet bereits eine Vorbehandlung der erzeugten Granulate im Adapterstutzen, bspw. ein Trocknungsprozess, sodass eine unerwünschte Agglomeration der Granulate verhindert oder zumindest deutlich reduziert wird.

Des Weiteren ist oder wird der zweite Teil des Anströmbodens oder der zweite Anströmboden zum Fluidisieren von Granulat im Bereich des Adapterstutzens von Prozessluft des Fluidisierungsapparates durchströmbar oder durchströmt. Vorteilhaft an dieser technischen Ausgestaltung der Erfindung ist, dass es hierdurch möglich wird die Prozessluft des Fluidisierungsapparates auch für die Fluidisierung des im Adapterstutzen geförderten Granulats zu verwenden. Dies hat weiterhin den Vorteil, dass die für die Prozessluft eingestellten Prozessparameter, wie Gastemperatur, Gasfeuchte usw., für im Fluidisierungsapparat angeordneten ersten Teil des Anströmbodens oder den ersten Anströmboden und den im Adapterstutzen angeordneten zweiten Teil des Anströmbodens oder den zweiten Anströmboden identisch sind. Des Weiteren werden dadurch Apparate für eine vom Fluidisierungsapparat unabhängige Anströmung des zweiten Teils des Anströmbodens oder den zweiten Anströmboden und somit erhebliche Investitionskosten eingespart.

Entsprechend einer besonders vorteilhaften Ausführungsform der erfindungsgemäßen Vorrichtung sind der erste Teil des Anströmbodens und der zweite Teil des Anströmbodens oder der erste und der zweite Anströmboden derart konstruiert, dass ein Druckverlust beim Durchströmen der zwei Teile des Anströmbodens oder der zwei Anströmböden identisch ist. Eine derartige Ausgestaltung der beiden Teile des Anströmbodens oder der zwei Anströmböden hat den Vorteil, dass die Prozessluft die in den Adapterstutzen eintretenden Granulate sofort fluidisiert, da die Prozessluft gleichmäßig durch die gesamte Anströmbodenfläche hindurchströmt.

Besonders bevorzugt weist der Adapterstutzen ein konisch ausgebildetes Adapterstutzengehäuse auf. Durch die konische Ausgestaltung des Adapterstutzens, insbesondere auf der Seite des Fluidisierungsapparates wird eine verbesserte Anströmung des im Adapterstutzen angeordneten zweiten Teils Anströmbodens mit Prozessluft aus dem Fluidisierungsapparat aufgrund einer verbesserten Geometrie des Einlaufstreckenbereichs erzielt.

Gemäß einer zusätzlichen vorteilhaften Ausgestaltung der erfindungsgemäßen Vorrichtung weist der zweite Teil des Anströmbodens oder der zweite Anströmboden eine zumindest teilweise horizontale Ausrichtung entlang der Längsachse des Adapterstutzens auf. Am meisten bevorzugt ist der zweite Teil des Anströmbodens oder der zweite Anströmboden in einem Winkel zur Längsachse des Adapterstutzens angeordnet ist. Durch eine winklige Anordnung des im Adapterstutzen angeordneten zweiten Teils des Anströmbodens oder des zweiten Anströmbodens, insbesondere mit einem Gefälle von Granulator zu Fluidisierungsapparat, wird eine verbesserte Förderung der erzeugten Granulate vom Granulator zum Fluidisierungsapparat, da sich die Granulate im fluidisierten Zustand entsprechend einer Flüssigkeit verhalten und dementsprechend in Richtung des Fluidisierungsapparates "fließen".

Nach einer zusätzlichen vorteilhaften Ausgestaltung der erfindungsgemäßen Vorrichtung weist eine Stirnwand und/oder Seitenwand des zweiten Teils des Anströmbodens oder des zweiten Anströmbodens ein Dichtelement auf. Hierdurch ist es möglich den einen zweiten Teil des Anströmbodens oder dem zweiten Anströmboden aufweisenden Adapterstutzen gegenüber den mit diesem verbundenen Apparaten, nämlich dem Fluidisierungsapparat und dem Granulator, verbessert abzudichten.

Diesbezüglich vorteilhaft ist die Seitenwand des zweiten Teils des Anströmbodens oder des zweiten Anströmbodens zumindest teilweise gegenüber einer Innenwandung eines Adapterstutzengehäuses und/oder einer Innenwandung des Einlasses für das Granulat in den Fluidisierungsapparat abgedichtet. Diesbezüglich bevorzugt ist der Anströmboden des Adapterstutzens mit der Innenwandung des Adapterstutzens fest verbunden, d.h. an der Innenwandung für Prozessluft undurchlässig verbunden. Weiterhin vorteilhaft ist die Stirnwand des zweiten Teils des Anströmbodens oder des zweiten Anströmbodens zumindest teilweise gegenüber dem im Fluidisierungsapparat angeordneten ersten Teil des Anströmbodens oder dem ersten Anströmboden und/oder dem Auslass für das erzeugte Granulat abgedichtet ist.

Bevorzugt ist der das Granulat erzeugende Granulator als Extruder, besonders bevorzugt als Doppelschneckenextruder, ausgebildet. Durch den Doppelschneckenextruder wird das Granulat gleichmäßig und mit gleicher Geschwindigkeit erzeugt, sodass die in den Adapterstutzen eintretenden Granulate von optimaler Beschaffenheit sind. Ganz besonders bevorzugt ist der Auslass des Granulators als Ende der Extruderschnecke oder als Enden der Extruderschnecke ausgebildet.

Bei einer weiteren vorteilhaften Ausgestaltung der erfindungsgemäßen Vorrichtung ist der im Fluidisierungsapparat angeordnete erste Teil des Anströmbodens oder der im Fluidisierungsapparat angeordnete erste Anströmboden um eine vertikale Mittelachse des Fluidisierungsapparates drehbar. Hierdurch wird ein kontinuierlicher Herstellungs- und Behandlungsprozess ermöglicht, wodurch zum einen eine Erhöhung der Produktionskapazität erzielbar ist bzw. erzielt wird und zum anderen die Verweilzeiten der Granulate im kontinuierlichen Behandlungsprozess definiert einstellbar sind.

Gemäß einer bevorzugten Ausführungsform der erfindungsgemäßen Vorrichtung weist der im Fluidisierungsapparat angeordnete erste Teil des Anströmbodens oder der im Fluidisierungsapparat angeordnete erste Anströmboden zumindest eine erste und eine zweite Anströmbodenplatte auf. Diesbezüglich besonders bevorzugt weist der erste Teil des Anströmbodens oder der erste Anströmboden des Fluidisierungsapparates drei Anströmbodenplatten auf. Durch eine solche Anordnung von mindestens zwei übereinander angeordneten Anströmbodenplatten ist zum einen der Druckverlust über dem Anströmboden durch unterschiedliche Anordnung zueinander verbessert einstellbar und zum anderen wird die herkömmliche Konstruktion eines Anströmbodens vereinfacht.

Ganz besonders bevorzugt bildet eine der Anströmbodenplatten ein Dichtelement aufweist oder ausbildet. Am meisten bevorzugt ist hierbei die Variante, dass die eine Anströmbodenplatte und das Dichtelement als zwei Bauteile ausgebildet sind. Durch die Ausbildung eines Dichtelements, insbesondere einer Dichtlippe oder dgl., durch eine der Anströmbodenplatten bzw. durch eine Anordnung eines Dichtelements an einer der Anströmbodenplatten wird eine optimale und einfache Möglichkeit der Abdichtung zum einen zwischen dem Anströmboden und der Außenwandung des Fluidisierungsapparates und zum anderen zwischen dem ersten Teil des Anströmbodens oder dem ersten Anströmboden des Fluidisierungsapparates und dem zweiten Teil des Anströmbodens oder dem zweiten Anströmboden des Adapterstutzens erzielt.

Diese Aufgabe wird bei einem Verfahren zur Herstellung und Behandlung von Granulat der eingangs genannten Art dadurch gelöst, dass der Granulator über einen eine Längsachse A-A aufweisenden Adapterstutzen mit dem Fluidisierungsapparat verbunden ist, wobei der zweiteilig ausgebildete Anströmboden im Adapterstutzen und im Fluidisierungsapparat angeordnet ist, wobei ein erster Teil des Anströmbodens im Fluidisierungsapparat und ein zweiter Teil des Anströmbodens im Adapterstutzen angeordnet ist, wobei zuerst durch den Granulator ein Granulat erzeugt wird und danach das erzeugte Granulat bei Austritt aus dem Granulator mittels des an dem Auslass des Granulators angrenzenden Anströmboden oder des unterhalb des Auslasses des Granulators angeordneten Anströmbodens fluidisiert wird, sodass eine Behandlung des Granulats erfolgt. Vorteilhafterweise wird hierdurch eine Agglomeration des in dem Granulator erzeugten, feuchten Granulats verhindert oder zumindest deutlich reduziert. Verstopfungen, die durch Agglomeration von Granulaten verursacht werden, bspw. im Auslass des Granulators, einer als Adapterstutzen ausgebildeten Förderleitung des Granulats und/oder am Einlass des Fluidisierungsapparates, werden verhindert oder zumindest deutlich reduziert. Somit ist eine mit einem erheblichen Zeitaufwand sowie einem großen Produktverlust verbundene Prozessunterbrechung zur Reinigung der Vorrichtung, insbesondere des Auslasses des Granulators, einer als Adapterstutzen ausgebildeten Förderleitung des Granulats und/oder des Einlasses des Fluidisierungsapparates, nicht mehr notwendig. Solche Prozessunterbrechungen sind kosten- und zeitintensiv, da zwangsläufig der gesamte Herstellungs- und Behandlungsprozess für das Granulat abgebrochen werden muss und nach der Reinigung die Vorrichtung des Herstellungs- und Behandlungsprozesses erneut anzufahren ist.

Besonders bevorzugt ist das Verfahren zur Herstellung und Behandlung von Granulat ein kontinuierliches Verfahren. Durch ein kontinuierliches Herstellungs- und Behandlungsverfahren wird die Produktionskapazität des erfindungsgemäßen Verfahrens weiter erhöht.

Ganz besonders bevorzugt ist die Vorrichtung zur Herstellung und Behandlung von Granulat eine Vorrichtung gemäß einem der Ansprüche 1 bis 11.

Vorteilhafterweise weist ein Adapterstutzen zur Verbindung eines ein Granulat erzeugenden Granulators und eines Fluidisierungsapparates, wobei der eine Längsachse aufweisende Adapterstutzen ein Adapterstutzengehäuse sowie einen Einlass und einen Auslass umfasst, einen Anströmboden auf. Durch die Anordnung eines Anströmbodens im den Fluidisierungsapparat und den Granulator verbindenden Adapterstutzen wird vorteilhafterweise eine Agglomeration des in dem Granulator erzeugten, feuchten Granulats während des Fördervorgangs in den Fluidisierungsapparat verhindert, sodass durch während des Fördervorgangs durch agglomerierte Granulate erzeugte Verstopfungen nicht mehr auftreten. Hierdurch ist eine mit einem erheblichen Zeitaufwand sowie Produktverlust verbundene Prozessunterbrechung zur Reinigung der Vorrichtung, insbesondere der als Adapterstutzen ausgebildeten Förderleitung, nicht mehr notwendig. Die Prozessunterbrechung ist kosten- und zeitintensiv, da hierdurch zwangsläufig der gesamte Herstellungs- und Behandlungsprozess abgebrochen werden und nach der Reinigung der Vorrichtung erneut zu initiieren ist. Diesbezüglich vorteilhaft ist der Anströmboden des Adapterstutzens zumindest teilweise im Adapterstutzen angeordnet. Eine solche Anordnung bietet den Vorteil, dass die einzelnen Apparate, nämlich Granulator, Adapterstutzen und Fluidisierungsapparat optimal aufeinander abstimmbar bzw. abgestimmt sind, bspw. in Bezug auf einen in den Adapterstutzen ragenden Auslass des Granulators. Besonders bevorzugt weist der Adapterstutzen ein konisch ausgebildetes Adapterstutzengehäuse auf. Durch die konische Ausgestaltung des Adapterstutzens, insbesondere auf der Seite des Fluidisierungsapparates wird eine verbesserte Anströmung des Anströmbodens mit Prozessluft aus dem Fluidisierungsapparat aufgrund einer verbesserten Geometrie der Einlaufstrecke erzielt. Ganz besonders bevorzugt weist der Anströmboden des Adapterstutzens eine zumindest teilweise horizontale Ausrichtung entlang der Längsachse des Adapterstutzens auf. Am meisten bevorzugt ist der Anströmboden des Adapterstutzens in einem Winkel zur Längsachse des Adapterstutzens angeordnet. Durch eine winklige Anordnung des Anströmbodens, insbesondere mit einem Gefälle von Granulator zu Fluidisierungsapparat, wird eine verbesserte Förderung der erzeugten Granulate erreicht, da sich die Granulate im fluidisierten Zustand entsprechend einer Flüssigkeit verhalten und dementsprechend Richtung Fluidisierungsapparat "fließen". Zweckmäßigerweise weist eine Stirnwand und/oder Seitenwand des Anströmbodens des Adapterstutzens ein Dichtelement auf. Hierdurch ist es möglich den einen zweiten Teil des Anströmbodens oder dem zweiten Anströmboden aufweisenden Adapterstutzen gegenüber den mit diesem verbundenen Apparaten, nämlich dem Fluidisierungsapparat und dem Granulator, verbessert abzudichten.

Nachfolgend wird die Erfindung anhand der beiliegenden Zeichnung näher erläutert. Es zeigen
- Figur 1: eine perspektivische Darstellung eines einen Fluidisierungsapparat und einen Granulator verbindenden Adapterstutzens eines ersten Ausführungsbeispiels einer erfindungsgemäßen Vorrichtung im Teilschnitt,
- Figur 2: eine perspektivische Darstellung eines am Fluidisierungsapparat angeordneten eine Längsachse A-A aufweisenden ersten Ausführungsspeispiels des Adapterstutzens im Vollschnitt,
- Figur 3: eine Seitenansicht des am Fluidisierungsapparat angeordneten eine Längsachse A-A aufweisenden ersten Ausführungsspeispiels des Adapterstutzens gemäß Fig. 2 im Vollschnitt,
- Figur 4: eine Seitenansicht eines am Fluidisierungsapparat angeordneten eine Längsachse A-A aufweisenden zweiten Ausführungsspeispiels des Adapterstutzens gemäß Fig. 2 im Vollschnitt,
- Figur 5: eine Seitenansicht eines am Fluidisierungsapparat angeordneten eine Längsachse A-A aufweisenden dritten Ausführungsspeispiels des Adapterstutzens gemäß Fig. 2 im Vollschnitt,
- Figur 6: eine perspektivische Darstellung eines drei Anströmbodenplatten aufweisenden Anströmbodens des Fluidisierungsapparates im Teilschnitt,
- Figur 7: eine Seitenansicht eines Vollschnitts durch einen drei Anströmbodenplatten aufweisenden Anströmboden,
- Figur 8: eine perspektivische Darstellung der erfindungsgemäßen Vorrichtung, wobei der den Adapterstutzen aufweisende Fluidisierungsapparat und der das Granulat erzeugende Granulator voneinander getrennt sind,
- Figur 9: eine perspektivische Darstellung der erfindungsgemäßen Vorrichtung, wobei der Fluidisierungsapparat und der das Granulat erzeugende Granulator mittels des Adapterstutzens miteinander verbunden sind,
- Figur 10: eine perspektivische Darstellung eines zweiten nicht erfindungsgemässen Ausführungsbeispiels einer einen Fluidisierungsapparat und einen Granulator aufweisenden Vorrichtung im Teilschnitt und
- Figur 11: eine schematische Darstellung des in Fig. 10 gezeigten zweiten Ausführungsbeispiels einer Vorrichtung.

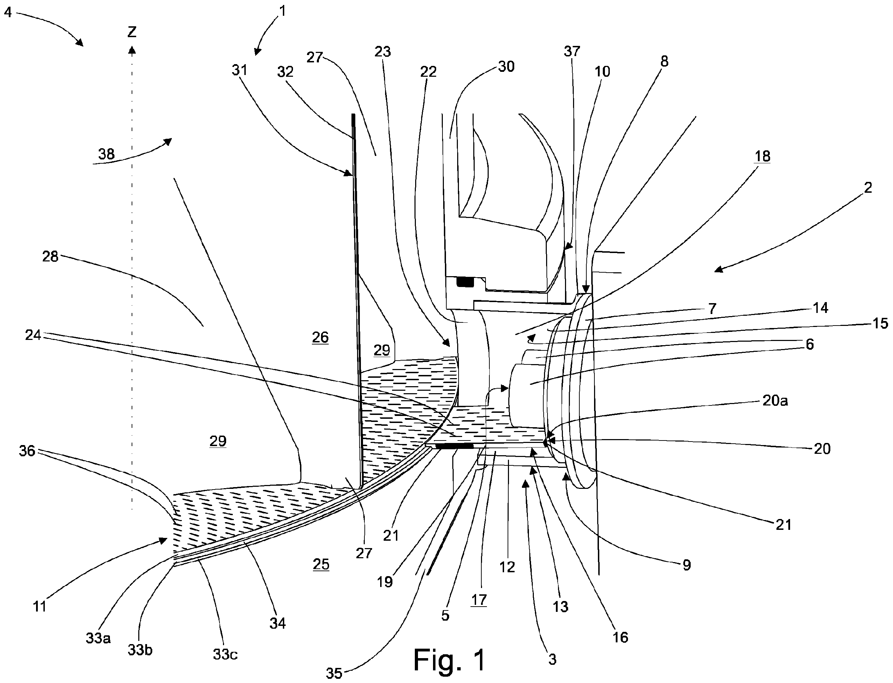

Fig. 1 zeigt eine perspektivische Darstellung eines einen Fluidisierungsapparat 1 und einen Granulator 2 verbindenden Adapterstutzens 3 eines ersten Ausführungsbeispiels einer erfindungsgemäßen Vorrichtung 4 im Teilschnitt.

Im Ausführungsbeispiel ist der das Granulat erzeugende Granulator 2 als Doppelschneckenextruder ausgebildet. Der Granulator 2 umfasst einen Auslass 5. Der Auslass 5 ist in Form von zwei Enden 6 der Extruderschnecken ausgebildet. Der Granulators 2 weist einen Flansch 7 zur Herstellung einer Verbindung 8 mit einem am Einlass 9 des Adapterstutzens 3 angeordneten Flansch 10 des Adapterstutzens 3 auf.

Der Adapterstutzen 3 der erfindungsgemäßen Vorrichtung 4 ist zwischen dem einen ersten Anströmboden 11 aufweisenden Fluidisierungsapparat 1 und dem Granulator 2 angeordnet und verbindet diese miteinander. Hierbei umfasst der Adapterstutzen 3 ein aus einem Rohrabschnitt 12 und einem an diesen anschließenden Flansch 10 ausgebildetes Adapterstutzengehäuse 13. Das Adapterstutzengehäuse 13 weist eine eine Innenfläche 14 aufweisende Innenwandung 15 auf. An der Innenfläche 14 der Innenwandung 15 des Adapterstutzens 3 ist ein zweiter Anströmboden 16 angeordnet. Im Ausführungsbeispiel ist der zweite Anströmboden 16 zumindest teilweise an der Innenwandung 15 des Adapterstutzens 3 angeordnet, d.h. fest mit der Innenwandung 15 des Adapterstutzens 3 verbunden.

Der zweite Anströmboden 16 unterteilt den Adapterstutzen 3 zumindest teilweise in eine untere erste Kammer 17 und eine obere zweite Kammer 18. Nicht mit der Innenwandung 15 des Adapterstutzens 3 fest verbundene Seitenwände 19 oder Stirnwände 20 können vorteilhafterweise zumindest teilweise ein Dichtelement 21, insbesondere einer Dichtlippe oder dgl., aufweisen. Im Ausführungsbeispiel sind die an den Granulator 2 angrenzende Stirnwand 20a sowie die im Bereich einer Innenwandung 22 eines Einlasses 23 des Fluidisierungsapparates 1 angrenzenden Seitenwände 19 des im Adapterstutzen 3 angeordneten zweiten Anströmbodens 16 mit einem Dichtelement 21 versehen.

Durch die am zweiten Anströmboden 16 angeordneten Dichtelemente 21 wird der Adapterstutzen 3 in einem mit dem Fluidisierungsapparat 1 und dem Granulator 2 verbundenem Zustand derart abgedichtet, dass im Adapterstutzen 3 ein gasförmiges Medium - auch als Prozessluft bezeichnet - ausschließlich durch die Öffnungen 24 des zweiten Anströmbodens 16 von der unteren ersten Kammer 17 in eine obere zweite Kammer 18 strömt. Der zweite Anströmboden 16 des Adapterstutzens 3 kann als mehrteiliger Anströmboden 16, insbesondere mit mehrlagig angeordneten Anströmbodenplatten, ausgebildet sein. Im Ausführungsbeispiel ist der zweite Anströmboden 16 des Adapterstutzens 3 als einlagiger, zweiter Anströmboden 16 ausgebildet.

Der zweite Anströmboden 16 ist bevorzugt, wie im Ausführungsbeispiel dargestellt, in einem Winkel α zur Längsachse A-A des Adapterstutzens 3 angeordnet. Hierbei ist der Winkel α dergestalt ausgebildet, dass vom Granulator 2 hin zum Einlass 23 des Fluidisierungsapparates 1 ein Gefälle entsteht. Hierdurch "fließen" die durch den zweiten Anströmboden 16 im erfindungsgemäßen Adapterstutzen 3 fluidisierten Granulate, die ich im fluidisierten Zustand wie eine Flüssigkeit verhalten, vom Granulator 2 in den Fluidisierungsapparat 1.

Im Ausführungsbeispiel weist der Fluidisierungsapparat 1 eine Verteilerkammer 25 und eine Wirbelkammer 26 auf, wobei die Verteilerkammer 25 und die Wirbelkammer 26 durch einen ersten Anströmboden 11 voneinander getrennt sind. Ein in die Verteilerkammer 25 über eine nicht dargestellte Eintrittsöffnung für die Prozessluft eintretende Prozessluft wird über den ersten Anströmboden 11, insbesondere gleichmäßig, auf die Wirbelkammer 26 verteilt und durchströmt sowohl den ersten Anströmboden 11 als auch den im Adapterstutzen 3 angeordneten zweiten Anströmboden 16 in Richtung der Wirbelkammer 26. Die Prozessluft wird in einem hier nicht gezeigten oberen Abschnitt des Fluidisierungsapparates 1 aus diesem ausgeschleust und vorab bevorzugt über einen nicht dargestellten Filter abgereinigt.

Die Wirbelkammer 26 umfasst einen Trennwände 27 aufweisenden Verdrängungskörper 28. Durch die Trennwände 27 wird die Wirbelkammer 26 in Prozesskammern 29 unterteilt. Die Trennwände 27 erstrecken sich vom Verdrängungskörper 28 bis zu einer Seitenwand 30 der Wirbelkammer 26. Darüber hinaus umfassen die Trennwände 27 eine an ihrem äußeren Ende 31 angeordnete Dichtelemente 32, insbesondere in Form einer Dichtlippe. Hierdurch sind die Prozesskammern 29 voneinander getrennt, sodass kein Granulat von einer Prozesskammer 29 in eine andere Prozesskammer 29 gelangt. Die Trennwände 27 erstrecken sich zudem vom Anströmboden 26 ausgehend in beliebiger Höhe in Richtung einer vertikalen Mittelachse Z des Fluidisierungsapparates 1. Die Höhe der Trennwände 27 ist änderbar bzw. anpassbar und insbesondere von dem zu behandelnden Granulat abhängig.

Der erste Anströmboden 11 des Fluidisierungsapparates 1 weist im Ausführungsbeispiel eine obere Anströmbodenplatte 33a, eine mittlere Anströmbodenplatte 33b und eine untere Anströmbodenplatte 33c auf. Hierbei weist bevorzugt die mittlere Anströmbodenplatte 33b ein um den ersten Anströmboden umlaufendes Dichtelement 34, insbesondere eine Dichtlippe oder dgl., auf oder bildet selbst eine solches Dichtelement 34 aus. Die mittlere Anströmbodenplatte 33b ist vorzugsweise aus Polytetrafluorethylen (PTFE) hergestellt. Im Ausführungsbeispiel dichtet das Dichtelement 34 des ersten Anströmbodens 11 des Fluidisierungsapparates 1, insbesondere eine der Anströmbodenplatten 33a bis 33c, gegenüber der Seitenwand 35 der Verteilerkammer 25 ab. Im Bereich des Einlasses 23 des Fluidisierungsapparates 1 dichtet das Dichtelement 34 des ersten Anströmbodens 11 gegenüber dem zweiten Anströmboden 16 des Adapterstutzens 3 ab. Die einzelnen Anströmbodenplatten 33a, 33b und 33c weisen Öffnungen 36a, 36b und 36c auf. Die Öffnungen 36a bis 36c sind derart ausgebildet, dass diese für die Prozessluft einen Druckverlust über den beiden Anströmböden 11, 16 erzeugen, wobei dieser Druckverlust so einstellbar ist und eingestellt wird, dass sich in einer Prozesskammer 29 befindende Granulate stets, d.h. dass eine Fluidisierung in jeder Prozesskammer 29 stattfindet, fluidisiert werden. Hierdurch wird sichergestellt, dass das gasförmige Medium, die Prozessluft, über die Verteilerkammer 25 durch die Öffnungen 24 des zweiten im Adapterstutzen 3 angeordneten Anströmbodens 16 bzw. die Öffnungen 36 des ersten Anströmbodens 11 des Fluidisierungsapparates 1 in die Wirbelkammer 26 strömt und dort die Granulate fluidisiert.

Der Adapterstutzen 3 ist am Einlass 23 des Fluidisierungsapparates 1 angeordnet. Der Einlass 23 für das zu behandelnde Granulat ist hierbei in einer Seitenwand 35 der Verteilerkammer 24 angeordnet. Der Einlass 23 des Fluidisierungsapparates 1 ist derart in einer Seitenwand 35 des Fluidisierungsapparates 1 angeordnet, dass der Einlass 23 jeweils eine Verbindung zur Verteilerkammer 25 und zur Wirbelkammer 26 aufweist. Die Seitenwand 35 der Verteilerkammer 25 ist im Ausführungsbeispiel über eine Verbindung 37, insbesondere eine Flanschverbindung, mit der Seitenwand 30 der Wirbelkammer 26 verbunden.

Im Betrieb der erfindungsgemäßen Vorrichtung 4 wird in einem ersten Schritt wird das Granulat im Granulator 2 durch Besprühen oder anderweitige Zugabe von insbesondere Binderflüssigkeit mit pulverförmigen Material, insbesondere Partikeln, und gleichzeitiges Vermischen hergestellt.

Anschließend tritt das im Granulator 2 erzeugte Granulat über die beiden Enden 6 des Granulators 2 in Form eines Doppelschneckenextruders in die obere zweite Kammer 18 des Adapterstutzens 3 ein. Dort wird das erzeugte, feuchte Granulat mit Eintritt in die obere zweite Kammer 18 des Adapterstutzens 3 durch die durch den im Adapterstutzen 3 angeordneten zweiten Anströmboden 16 strömende Prozessluft fluidisiert. Im fluidisierten Zustand verhalten sich die Granulate wie eine Flüssigkeit und "fließen" aufgrund des in einem Winkel α zur Längsachse A-A mit einem Gefälle vom Granulator 2 hin zum Einlass 23 des Fluidisierungsapparates 1 und dem im Fluidisierungsapparat 1 angeordneten ersten Anströmboden 11. Hierdurch werden die erzeugten, feuchten Granulate zumindest teilweise getrocknet, wodurch eine Agglomeration der Granulate am Auslass 5 des Granulators 2, im Adapterstutzen 3 und am Einlass 23 des Fluidisierungsapparates 1 verhindert bzw. deutlich reduziert wird.

Der am Verdrängungskörper 28 und dessen Trennwänden 27 angeordnete erste Anströmboden 11 dreht sich um eine Mittelachse Z des Fluidisierungsapparates 1 in Drehrichtung 38. Hierdurch gelangen die Granulate aus dem Granulator 2 über den Adapterstutzen 3 in eine Prozesskammer 29 des Fluidisierungsapparates 1. Dort werden die Granulate im fluidisierten Zustand behandelt. Die Granulate können bspw. mittels im Fluidisierungsapparat 1 angeordneter, hier nicht dargestellter Düsen mit unterschiedlichsten Flüssigkeiten, Emulsionen, Suspensionen oder dgl. besprüht und so nachbehandelt werden. Durch die konstante Drehgeschwindigkeit der Prozesskammern 29 des Fluidisierungsapparates 1 werden die Granulate stets gleich und optimal bei gleichbleibender Verweilzeit behandelt und anschließend aus dem Fluidisierungsapparat 1 über einen nicht dargestellten Auslass des Fluidisierungsapparates 1 aus diesem ausgeschleust.

Der erste und der zweite Anströmboden 11, 16 können auch als ein erster Teil 11 eines Anströmbodens und zweiter Teil 16 eines Anströmbodens ausgebildet sein. Bevorzugt sind bei einer solchen Ausgestaltung des Anströmbodens beide Teile 11, 16 des Anströmbodens identisch, d.h. bspw. aus dem gleichen Material, mit gleicher Anzahl an Anströmbodenplatten 33 und gleichem Querschnitt der Öffnungen 24, 36. Auch der erste und zweite Anströmboden 11, 16 können identisch ausgebildet sein.

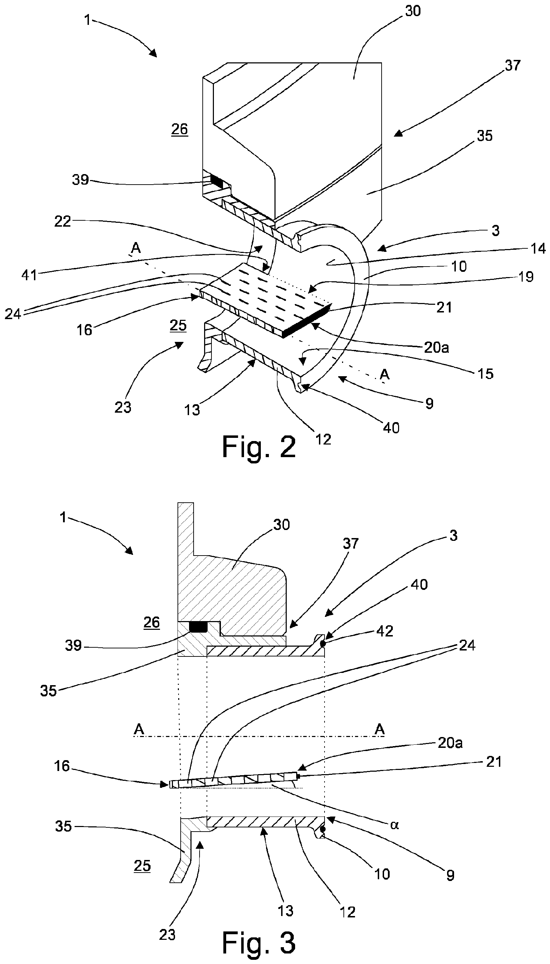

Fig. 2 stellt eine perspektivische Darstellung eines am Fluidisierungsapparat 1 angeordneten eine Längsachse A-A aufweisenden ersten Ausführungsspeispiels des erfindungsgemäßen Adapterstutzens 3 im Vollschnitt. Der Schnitt erfolgte entlang einer vertikalen Ebene durch die Längsachse A-A des Adapterstutzens 3. Der Adapterstutzen 3 ist am Einlass 23 des Fluidisierungsapparates 1 in der Seitenwand 35 der Verteilerkammer 25 angeordnet. Die Seitenwand 35 der Verteilerkammer 25 ist mittels einer Verbindung 37, insbesondere einer Flanschverbindung, mit der Seitenwand 30 der Wirbelkammer 26 verbunden, wobei zwischen den beiden Seitenwänden 30, 35 ein Dichtelement 39 angeordnet ist. Der die Verteilerkammer 25 und die Wirbelkammer 26 voneinander trennende im Fluidisierungsapparat 1 angeordnete erste Anströmboden 11 ist in Fig. 2 nicht dargestellt.

Der Adapterstutzen 3 weist ein Adapterstutzengehäuse 13 mit einem Rohrabschnitt 12 und einem am Rohrabschnitt 12 angeordneten Flansch 10 des Adapterstutzens 3 auf. Durch den Flansch 10 am Einlass 9 des Adapterstutzen 3 ist dieser mit einem hier nicht dargestellten am Granulator 2 angeordneten Flansch 7 verbindbar. Zur Abdichtung der Flansche 7, 10 wird ein nicht dargestelltes Dichtelement, insbesondere eine Ringdichtung oder eine Flachdichtung oder dgl., in der Nut 40 des Flanschs 10 angeordnet.

Der Öffnungen 24 aufweisende, einlagig ausgebildete zweite Anströmboden 16 ist teilweise im Adapterstutzen 3 angeordnet. Hierbei sind die Seitenwände 19 des zweiten Anströmbodens 16 zumindest teilweise mit der Innenfläche 14 der Innenwandung 15 des Adapterstutzengehäuses 13 fest verbunden. Diese Verbindung wird mittels der in Fig. 2 dort gezeigten gestrichelten Linie dargestellt. Der im Bereich der Innenwandung 22 des Einlasses 23 angeordnete Abschnitt 41 der Seitenwand 19 des zweiten Anströmbodens 16 wird gegenüber der Innenwandung 22 des Einlasses 23 des Fluidisierungsapparates 1 mit einem nicht dargestellten Dichtelement 21 abgedichtet. Zur Abdichtung des im Adapterstutzen 3 teilweise angeordneten zweiten Anströmbodens 16 gegenüber dem nicht gezeigten Granulator 2 ist an der Stirnwand 20a die Dichtung 21 angeordnet. Eine Seitenansicht des am Fluidisierungsapparat 1 angeordneten eine Längsachse A-A aufweisenden ersten Ausführungsspeispiels des Adapterstutzens 3 gemäß Fig. 2 im Vollschnitt in Fig. 3 gezeigt. Der Adapterstutzen 3 ist am Einlass 23 des Fluidisierungsapparates 1 in der Seitenwand 35 der Verteilerkammer 25 angeordnet. Die Seitenwand 35 der Verteilerkammer 25 ist über die ein Dichtelement 39 aufweisende Verbindung 37 mit der Seitenwand 30 der Wirbelkammer 26 verbunden.

Des Weiteren ist in Fig. 3 gezeigt, dass der einlagig oder einschichtig ausgebildete, Öffnungen 24 aufweisende zweite Anströmboden 16 des Adapterstutzens 3 entlang der Längsachse A-A des Adapterstutzens 3 in einem Winkel α zu dieser angeordnet ist. Der Anströmboden 3 ragt auf der Seite des Fluidisierungsapparates 1 aus dem Adapterstutzen 3 heraus und im Ausführungsbeispiel leicht in den Fluidisierungsapparat 1 hinein. Durch den Winkel α gegenüber der Längsachse A-A des Adapterstutzens 3 weist der zweite Anströmboden 16 ein Gefälle vom Einlass 9 des Adapterstutzens 3 in Richtung des Einlasses 23 des Fluidisierungsapparates 1 auf. Zudem erstreckt sich der zweite Anströmboden 16 nicht durch den gesamten Adapterstutzen 3, sondern endet nach etwa 3/4 der Länge des Adapterstutzens 3 in diesem.

An der Stirnseite 20a des zweiten Anströmbodens 16 des Adapterstutzen 3 ist ein Dichtelement 21, insbesondere in Form einer Dichtlippe oder dgl., angeordnet, die zwischen dem zweiten Anströmboden 16 und dem hier nicht dargestellten Granulator 2 abgedichtet. Des Weiteren ist in der Nut 40 des an den Rohrabschnitt 12 des Flanschs 10 des Adapterstutzengehäuses 13 ein Dichtelement 42, vorzugsweise eine Ringdichtung, beispielsweise ein O-Ring, angeordnet.

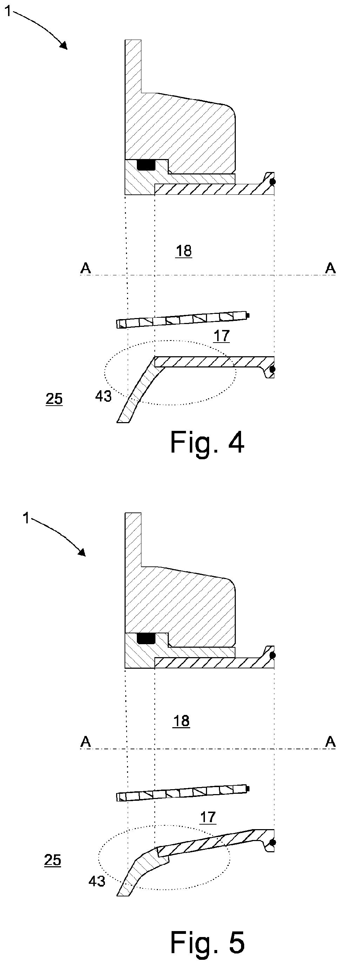

Die beiden Fign. 4 und 5 zeigen eine Seitenansicht eines am Fluidisierungsapparat 1 angeordneten eine Längsachse A-A aufweisenden zweiten bzw. dritten Ausführungsspeispiels des Adapterstutzens 3 gemäß Fig. 2 im Vollschnitt.

Im Vergleich zu dem in den Fign. 2 und 3 dargestellten ersten Ausführungsbeispiel des Adapterstutzens 3 weisen das zweite und dritte Ausführungsbeispiel einen geänderten, optimierten Einlaufstreckenbereich 43 für aus der Verteilerkammer 25 des Fluidisierungsapparates 1 in die untere erste Kammer 17 strömende Prozessluft auf. Der optimierte Einlaufstreckenbereich 43 führt zu einer verbesserten Fluidisierung der in die obere zweite Kammer 18 aus dem nicht dargestellten Auslass 5 des Granulators 2 eintretenden Granulate.

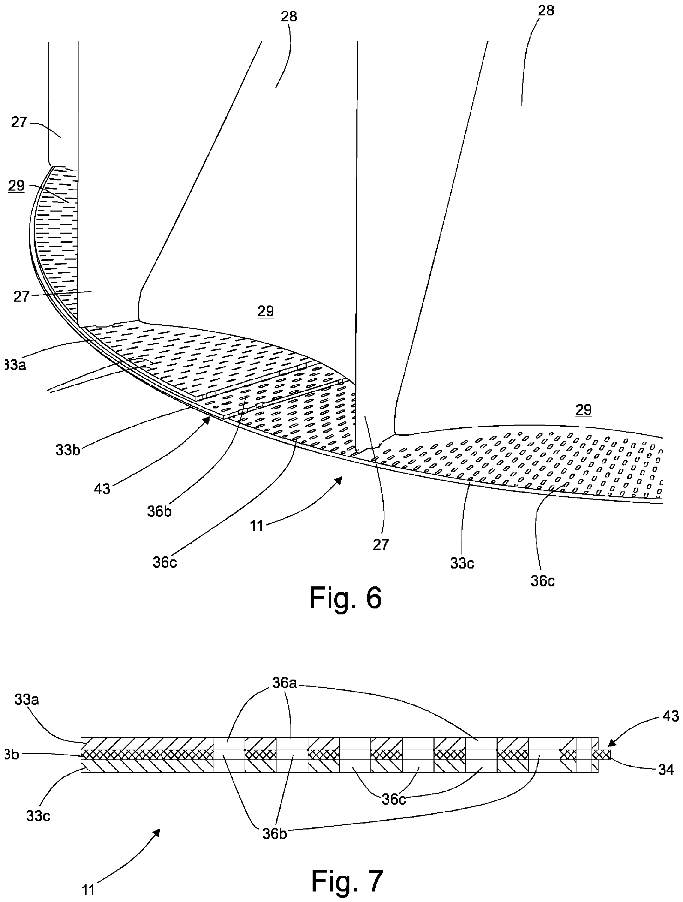

In Fig. 6 ist eine perspektivische Darstellung eines drei Anströmbodenplatten 33a bis 33c aufweisenden ersten Anströmbodens 11 des Fluidisierungsapparates 1 im Teilschnitt dargestellt. Der drei Anströmbodenplatten 33a bis 33c aufweisende erste Anströmboden 11 ist am Trennwände 27 umfassenden Verdrängungskörper 28 des Fluidisierungsapparates 1 angeordnet. Durch die Trennwände 27 wird die Wirbelkammer 26 des Fluidisierungsapparates 1 in Prozesskammern 29 unterteilt.

Zur vereinfachten Darstellung wurden in Fig. 6 die drei Anströmbodenplatten 33a bis 33c des ersten Anströmbodens 11 nicht durchgängig dargestellt. Die untere Anströmbodenplatte 33c weist im Ausführungsbeispiel Öffnungen 36c auf, die den Öffnungen 36b der mittleren Anströmbodenplatte 33b entsprechen. Die untere Anströmbodenplatte 33c hat die Funktion der Halterung und Stabilisierung der als Dichtungsboden ausgebildeten mittleren Anströmbodenplatte 33b. Vorzugsweise wird die untere Anströmbodenplatte 33c ebenso wie die obere Anströmbodenplatte 33a aus Stahl, insbesondere Edelstahl, hergestellt. Die als Dichtungsboden ausgebildete Anströmbodenplatte 33b ist bevorzugt aus Polytetrafluorethylen (PTFE) hergestellt. Damit die mittlere Anströmbodenplatte 33b als Dichtungsboden nutzbar ist, muss diese entweder einen im Vergleich zu der unteren und oberen Anströmbodenplatte 33a bzw. 33b größeren Durchmesser aufweisen oder an ihrem äußeren Ende 43 ein nicht dargestelltes Dichtelement 34 umfassen. Im Ausführungsbeispiel bildet die mittlere Anströmbodenplatte 33b aufgrund ihres größeren Durchmessers im Vergleich zu den Anströmbodenplatten 33a und 33c das Dichtelement 34 an ihrem äußeren Ende 43 selbst aus.

Die obere Anströmbodenplatte 33a des ersten im Fluidisierungsapparat 1 angeordneten Anströmbodens 11 weist in der im Ausführungsbeispiel dargestellten bevorzugten Ausführungsform kleinere Öffnungen 36a, insbesondere in Schlitzform mit einer Breite von 0,2 mm, auf. Durch die Öffnungen 36a bis 36c der Anströmbodenplatten 33a bis 33c, insbesondere durch die obere Anströmbodenplatte 36a, wird der über dem ersten Anströmboden 11 erzeugte Druckverlust eingestellt. Bei einer optimalen Einstellung des über dem ersten Anströmboden 11 erzeugten Druckverlusts wird das zu behandelnde Granulat optimal fluidisiert, d.h. die Prozessluft fluidisiert auch das erzeugte, feuchte in die Prozesskammer 29 eintretende Granulat.

Durch eine derartige Ausgestaltung des ersten im Fluidisierungsapparat angeordneten Anströmbodens 11, insbesondere durch die als Dichtungsboden ausgebildete mittlere Anströmbodenplatte 33b, kann dieser im Fluidisierungsapparat 1 um eine Mittelachse Z gedreht werden und gleichzeitig ohne Abnutzungserscheinungen zu zeigen die Verteilerkammer 25 von der Wirbelkammer 26 sowie den im Adapterstutzen 3 angeordneten zweiten Anströmboden 16 gegenüber dem ersten Anströmboden 11 abdichten.

Fig. 7 zeigt eine Seitenansicht eines Vollschnitts durch einen drei Anströmbodenplatten 33a bis 33c aufweisenden im Fluidisierungsapparat 1 angeordneten ersten Anströmboden 11. Die mittlere Anströmbodenplatte 33b weist einen im Vergleich zu der oberen und unteren Anströmbodenplatte 33a und 33c größeren Durchmesser auf. Im dargestellten Ausführungsbeispiel bildet die mittlere Anströmbodenplatte 33b dadurch an ihrem äußeren Ende 43 ein Dichtelement 34 aus.

Die Öffnungen 36a bis 36c der Anströmbodenplatten 33a bis 33c sind im Ausführungsbeispiel übereinander angeordnet, wobei gemäß Fig. 6 die Öffnungen 36a der Anströmbodenplatte 33a eine hier nicht dargestellte geringere Breite im Vergleich zu den Öffnungen 36b und 36c aufweisen.

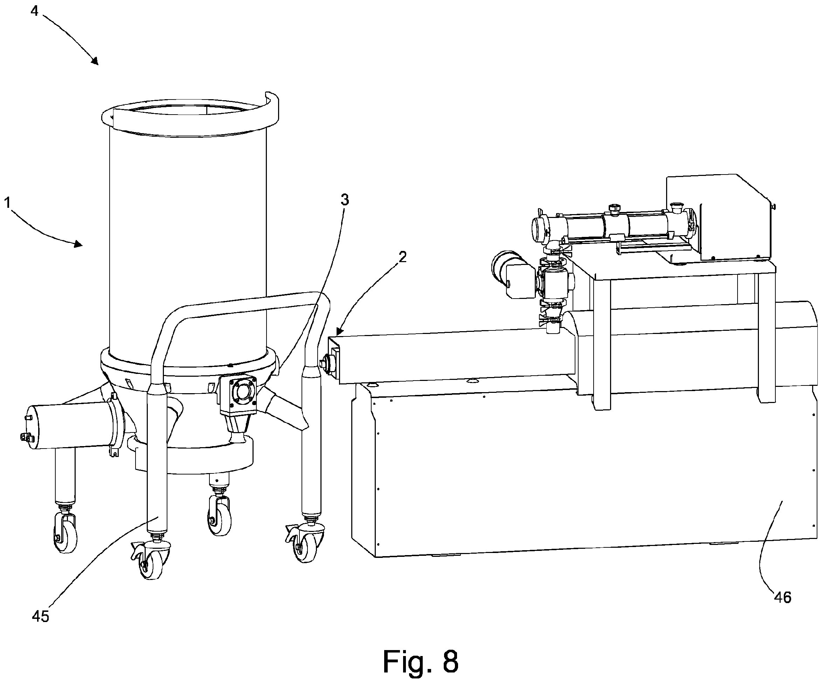

Eine perspektivische Darstellung der erfindungsgemäßen Vorrichtung 4, wobei der den Adapterstutzen 3 aufweisende Fluidisierungsapparat 1 und der das Granulat erzeugende Granulator 2 voneinander getrennt sind wird in Fig. 8 dargestellt. Der auf einem fahrbaren Gestell 45 angeordnete, den Adapterstutzen 3 aufweisende Fluidisierungsapparat 1 ist im Ausführungsbeispiel der Fig. 8 vom als Doppelschneckenextruder ausgebildeten, auf einem Grundgestell 46 angeordneten Granulator 2 entkoppelt.

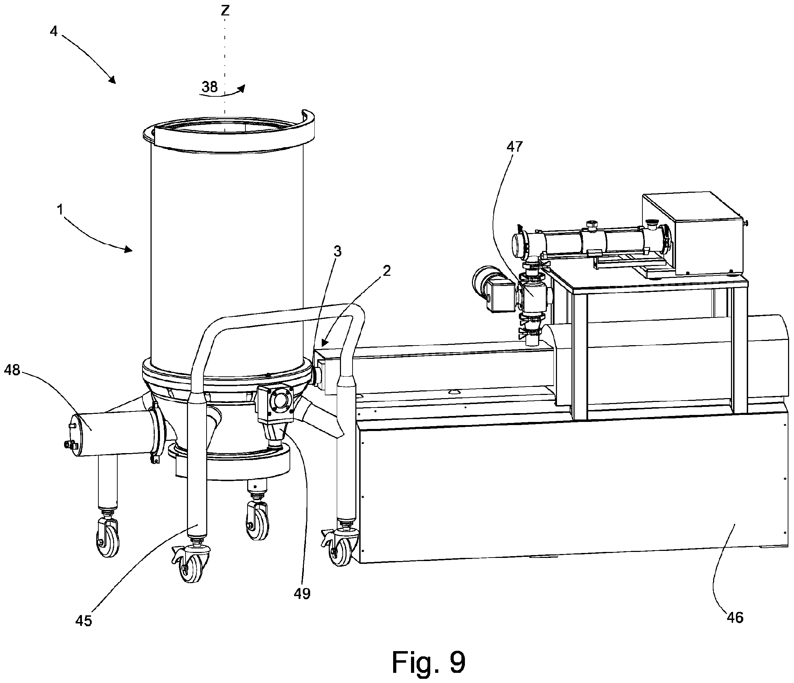

In Fig. 9 ist eine perspektivische Darstellung der erfindungsgemäßen Vorrichtung 4, wobei der Fluidisierungsapparat 1 und der das Granulat erzeugende Granulator 2 mittels des Adapterstutzens 3 miteinander verbunden sind, gezeigt. Der auf einem fahrbaren Gestell 45 angeordnete, den Adapterstutzen 3 aufweisende Fluidisierungsapparat 1 ist im Ausführungsbeispiel der Fig. 9 mit dem als Doppelschneckenextruder ausgebildeten Granulator 2 verbunden. Es besteht die Möglichkeit den Granulator 2 zur einfachen Montage, sowie zu Reinigung- und Wartungszwecken auf ein Grundgestell 46 zu montieren, wobei das Grundgestell 46 ein lineare Verschiebeeinheit zum Verschieben des Granulators 2 aufweist, sodass zur Kopplung von Fluidisierungsapparat 1 und Granulator 2 der erfindungsgemäßen Vorrichtung 4 der Granulator 2 mittels der linearen Verschiebeeinheit verschoben wird. Im Ausführungsbeispiel wurde der Granulator 2 mittels der linearen Verschiebeeinheit in Richtung Fluidisierungsapparat 1 verschoben und so mit diesem gekoppelt.

Das in den Granulator 2 über Zuführungsleitungen 47 eintretende partikelförmige Material wird im Granulator mit Binderflüssigkeit vermischt und es bildet sich das Granulat. Das aus dem Granulator 2 austretende Granulat wird im Adapterstutzen 3 fluidisiert und dadurch in den Fluidisierungsapparat 1 gefördert. Dort wird das Granulat in den nicht dargestellten Prozesskammer 29 behandelt. Im Ausführungsbeispiel drehen die nicht gezeigten Prozesskammern 29 um die Mittelachse Z in Drehrichtung 38. Hierbei wird der Trennwände 27 aufweisende Verdrängungskörper 28 mitsamt dem ersten Anströmboden 11 durch einen ein Getriebe aufweisenden Motor 48, vorzugsweise einen Elektro-, Servo- oder Torquemotor angetrieben. Der Motor 48 weist vorzugsweise über seinem gesamten Drehzahlbereich ein konstantes Drehmoment auf. Hierdurch wird eine Verweilzeit des Granulats im Fluidisierungsapparat definiert eingestellt, bis das behandelte Granulat am Auslass 49 des Fluidisierungsapparates 1 aus der Vorrichtung 4 ausgeschleust wird.

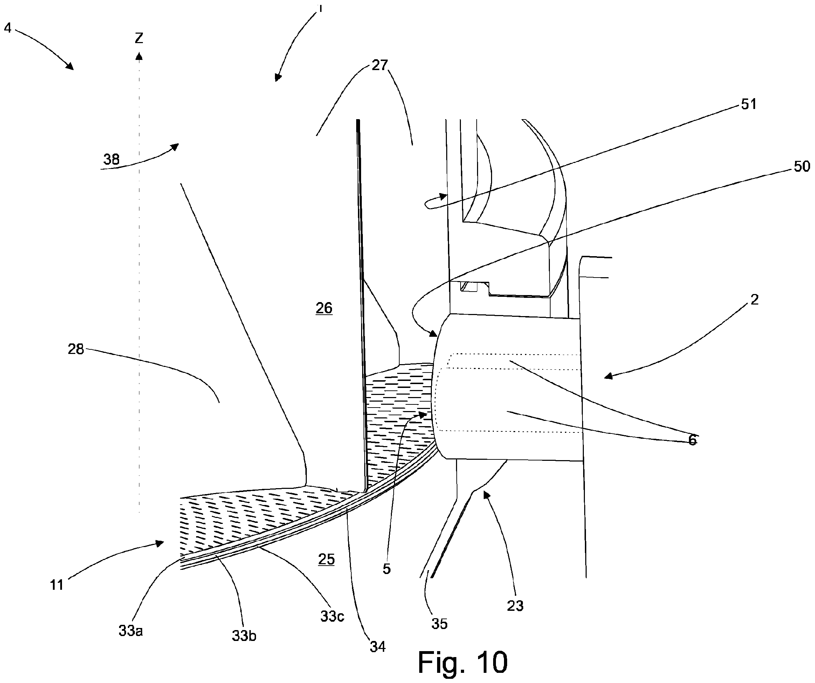

Fig. 10 stellt eine perspektivische Darstellung eines zweiten nicht erfindungsgemässen Ausführungsbeispiels einer einen Fluidisierungsapparat 1 und einen Granulator 2 aufweisenden Vorrichtung 4 im Teilschnitt. Im Unterschied zum ersten Ausführungsbeispiel der erfindungsgemäßen Vorrichtung 4 gemäß Fig. 1 weist das zweite Ausführungsbeispiel der Vorrichtung 4 keinen Adapterstutzen 3 auf. Der Granulator 2 ist direkt, d.h. ohne Verbindungsteil, wie ein Adapterstutzen 3, am Fluidisierungsapparat 1 angeordnet.

Der Fluidisierungsapparat 1 umfasst eine durch einen Anströmboden 11 von einer Verteilerkammer 25 getrennte Wirbelkammer 26. Hierbei ist der Anströmboden 11 dreilagig ausgebildet und weist Anströmbodenplatten 33a bis 33c auf. Die im Vergleich zu den Anströmbodenplatten 33a und 33c einen größeren Durchmesser aufweisende Anströmbodenplatte 33b dichtet zwischen der Verteilerkammer 25 und der Wirbelkammer 26 gegenüber einer Seitenwand 35 der Verteilerkammer 26 sowie gegenüber dem Auslass 5 des Granulators 2 mittels des durch die Anströmbodenplatte 33b selbst ausgebildeten Dichtelements 34 ab.

Zudem wird im Betrieb der Vorrichtung 4 der im Fluidisierungsapparat 1 am Verdrängungskörper 28 und den Trennwänden 27 angeordnete Anströmboden 11 um die Mittelachse Z in Drehrichtung 38 rotiert.

Der Granulator 2 ist im Ausführungsbeispiel als Doppelschneckenextruder ausgebildet und weist einen Auslass 5 für das erzeugte, feuchte Granulat in Form von zwei Enden 6 der Extruderschnecken auf. Der Granulator 2 ist mit den Fluidisierungsapparat 1 derart verbunden, dass der Auslass 5 des Granulators 2 an den im Fluidisierungsapparat 1 angeordneten Anströmboden 11 direkt angrenzt. Hierbei entspricht vorteilhafterweise eine Stirnwand 50 des Auslasses 5 des Granulators 2 in ihrer Ausbildung, bspw. Radius und Krümmung, einer Innenwandung 51 des Fluidisierungsapparates 1. Hierdurch wird ein kontinuierlicher Betrieb sichergestellt, da die Trennwände 27 am Auslass 5 des Granulators 2 vorbeidrehen können. Vorteilhafterweise wird hierdurch eine Agglomeration des in dem Granulator 2 erzeugten, feuchten Granulats verhindert oder zumindest deutlich reduziert. Verstopfungen, die durch Agglomeration von Granulaten verursacht werden, bspw. im Auslass des Granulators 2 und/oder am Einlass 23 des Fluidisierungsapparates 1, werden verhindert oder zumindest deutlich reduziert, da die aus dem Granulator 2 austretenden Granulate beim Eintritt in den Fluidisierungsapparat 1 sofort fluidisiert und im Fluidisierungsapparat 1 behandelt werden.

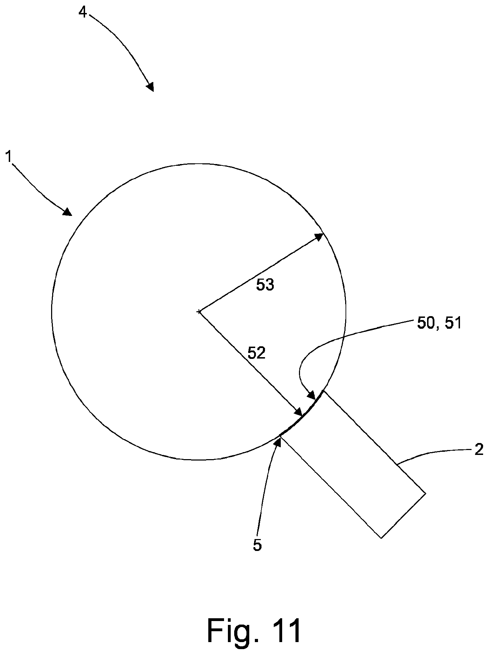

In Fig. 11 wird eine schematische Darstellung des in Fig. 10 gezeigten zweiten Ausführungsbeispiels einer Vorrichtung 4 dargestellt. Die in ihrer Ausbildung (in Fig. 11 als fette Linie dargestellt) der Stirnwand 50 des Auslasses 5 des Granulators 2 entsprechende Innenwandung 51 des Fluidisierungsapparates 1 der Vorrichtung 4 ist in ihrem Radius 53 identisch zur Krümmung der Stirnwand 50 mit dem Radius 52, sodass die den Auslass 5 bildenden Enden 6 der Extruderschnecken nicht in die Wirbelkammer 26 hineinragen.

## Patentansprüche

1. Vorrichtung (4) zur Herstellung und Behandlung von Granulat umfassend
(a) einen das Granulat erzeugenden Granulator (2) mit einem Auslass (5) für das erzeugte Granulat,
(b) einen das durch den Granulator (2) erzeugte Granulat behandelnden Fluidisierungsapparat (1) mit einem Einlass (23) für das zu behandelnde Granulat,
(c) einen von Prozessluft durchströmbaren Anströmboden (11, 16),
wobei der Granulator (2) mit dem Einlass (23) für das zu behandelnde Granulat des Fluidisierungsapparates (1) derart verbunden ist, dass der Auslass (5) des Granulators (2) an den Anströmboden (11, 16) angrenzt oder oberhalb des Anströmbodens (11, 16) angeordnet ist, **dadurch gekennzeichnet, dass** der Granulator (2) über einen eine Längsachse A-A aufweisenden Adapterstutzen (3) mit dem Fluidisierungsapparat (1) verbunden ist, wobei der zweiteilig ausgebildete Anströmboden (11, 16) im Adapterstutzen (3) und im Fluidisierungsapparat (1) angeordnet ist, wobei ein erster Teil (11) des Anströmbodens im Fluidisierungsapparat (1) und ein zweiter Teil (16) des Anströmbodens im Adapterstutzen (3) angeordnet ist.

2. Vorrichtung (4) nach Anspruch 1, **dadurch gekennzeichnet, dass** der erste Teil (11) des Anströmbodens Teil des Fluidisierungsapparates (1) ist.

3. Vorrichtung (4) nach Anspruch 1, **dadurch gekennzeichnet, dass** der zweite Teil (16) des Anströmbodens den Adapterstutzen (3) zumindest teilweise in eine erste Kammer (17) und eine zweite Kammer (18) unterteilt.

4. Vorrichtung (4) nach Anspruch 1, **dadurch gekennzeichnet, dass** der zweite Teil (16) des Anströmbodens zum Fluidisieren von Granulat im Bereich des Adapterstutzens (3) von Prozessluft des Fluidisierungsapparates (1) durchströmbar ist oder durchströmt wird.

5. Vorrichtung (4) nach Anspruch 1, **dadurch gekennzeichnet, dass** der erste Teil (11) des Anströmbodens und der zweite Teil (16) des Anströmbodens derart konstruiert sind, dass ein Druckverlust beim Durchströmen der zwei Teile (11, 16) des Anströmbodens identisch ist.

6. Vorrichtung (4) nach Anspruch 1, **dadurch gekennzeichnet, dass** der zweite Teil (16) des Anströmbodens eine zumindest teilweise horizontale Ausrichtung entlang der Längsachse A-A des Adapterstutzens (3) aufweist oder der zweite Teil (16) des Anströmbodens in einem Winkel (α) zur Längsachse A-A des Adapterstutzens (3) angeordnet ist.

7. Vorrichtung (4) nach Anspruch 1, **dadurch gekennzeichnet, dass** eine Stirnwand (20) und/oder Seitenwand (18) des zweiten Teils (16) des Anströmbodens ein Dichtelement (21) aufweist, wobei zweckmäßigerweise die Seitenwand (18) des zweiten Teils (16) des Anströmbodens (11, 16) zumindest teilweise gegenüber einer Innenwandung (15) eines Adapterstutzengehäuses (13) und/oder einer Innenwandung (22) des Einlasses (23) für das Granulat in den Fluidisierungsapparat (1) abgedichtet ist und/oder die Stirnwand (20) des zweiten Teils (16) des Anströmbodens zumindest teilweise gegenüber dem im Fluidisierungsapparat (1) angeordneten ersten Teil (11) des Anströmbodens und/oder dem Auslass (5) für das erzeugte Granulat abgedichtet ist.

8. Vorrichtung (4) nach einem der vorhergehenden Ansprüche, **dadurch gekennzeichnet, dass** der das Granulat erzeugende Granulator (2) als Extruder, besonders bevorzugt als Doppelschneckenextruder, ausgebildet ist oder der Auslass (5) des Granulators (2) als Ende (6) der Extruderschnecke oder als Enden (6) der Extruderschnecke ausgebildet ist.

9. Vorrichtung (4) nach einem der vorhergehenden Ansprüche, **dadurch gekennzeichnet, dass** der im Fluidisierungsapparat (1) angeordnete erste Teil (11) des Anströmbodens um eine vertikale Mittelachse Z des Fluidisierungsapparates (1) drehbar ist.

10. Vorrichtung (4) nach einem der vorhergehenden Ansprüche, **dadurch gekennzeichnet, dass** der im Fluidisierungsapparat (1) angeordnete erste Teil (16) des Anströmbodens zumindest eine erste und eine zweite Anströmbodenplatte (33) aufweist, wobei zweckmäßigerweise der erste Teil (11) des Anströmbodens des Fluidisierungsapparates (1) drei Anströmbodenplatten (33) aufweist.

11. Vorrichtung (4) nach Anspruch 10, **dadurch gekennzeichnet, dass** eine der Anströmbodenplatten (33) ein Dichtelement (34) aufweist oder ausbildet.

12. Verfahren zur Herstellung und Behandlung von Granulat umfassend
(a) einen das Granulat erzeugenden Granulator (2) mit einem Auslass (5) für das erzeugte Granulat,
(b) einen das durch den Granulator (2) erzeugte Granulat behandelnden Fluidisierungsapparat (1) mit einem Einlass (23) für das zu behandelnde Granulat,
(c) einen von Prozessluft durchströmbaren Anströmboden (11, 16),
wobei der Granulator (2) mit dem Einlass (23) für das zu behandelnde Granulat des Fluidisierungsapparates (1) derart verbunden ist, dass der Auslass (5) des Granulators (2) an den Anströmboden (11, 16) angrenzt oder oberhalb des Anströmbodens (11, 16) angeordnet ist, **dadurch gekennzeichnet, dass** der Granulator (2) über einen eine Längsachse A-A aufweisenden Adapterstutzen (3) mit dem Fluidisierungsapparat (1) verbunden ist, wobei der zweiteilig ausgebildete Anströmboden (11, 16) im Adapterstutzen (3) und im Fluidisierungsapparat (1) angeordnet ist, wobei ein erster Teil (11) des Anströmbodens im Fluidisierungsapparat (1) und ein zweiter Teil (16) des Anströmbodens im Adapterstutzen (3) angeordnet ist, wobei zuerst durch den Granulator (2) ein Granulat erzeugt wird und danach das erzeugte Granulat bei Austritt aus dem Granulator (2) mittels des an dem Auslass (5) des Granulators (2) angrenzenden Anströmboden (11, 16) oder des unterhalb des Auslasses (5) des Granulators (2) angeordneten Anströmbodens (11, 16) fluidisiert wird, sodass eine Behandlung des Granulats erfolgt.

13. Verfahren nach Anspruch 12, **dadurch gekennzeichnet, dass** das Verfahren zur Herstellung und Behandlung von Granulat ein kontinuierliches Verfahren ist.

14. Verfahren nach einem der Ansprüche 12 oder 13, **dadurch gekennzeichnet, dass** die Vorrichtung zur Herstellung und Behandlung von Granulat eine Vorrichtung (4) gemäß einem der Ansprüche 1 bis 11 ist.

## Claims

1. Device (4) for producing and treating granulate, comprising
(a) a granulator (2) producing granulate with an outlet (5) for the granulate produced,
(b) a fluidisation unit (1) treating the granulate produced by granulator (2) with an inlet (23) for the granulate to be treated,
(c) an inflow base (11, 16) through which process air can flow, whereby granulator (2) is connected to inlet (23) for the granulate from fluidisation unit (1) to be treated, such that outlet (5) of granulator (2) is adjacent to inflow base (11, 16) or is arranged above inflow base (11, 16), **characterised in that** granulator (2) is connected to fluidisation unit (1) through an adapter connecting piece (3) having a longitudinal axis A-A, whereby inflow base (11, 16) embodied in two parts is arranged in adapter connecting piece (3) and in fluidisation unit (1), whereby a first part (11) of the inflow base is arranged in fluidisation unit (1) and a second part (16) of the inflow base is arranged in adapter connecting piece (3).

2. Device (4) according to Claim 1, **characterised in that** first part (11) of the inflow base is part of fluidisation unit (1).

3. Device (4) according to Claim 1, **characterised in that** second part (16) of the inflow base divides adapter connecting piece (3) at least partially into a first chamber (17) and a second chamber (18).

4. Device (4) according to Claim 1, **characterised in that** process air from fluidisation unit (1) can flow through or flows through second part (16) of the inflow base to fluidise granulate in the area of adapter connecting piece (3).

5. Device (4) according to Claim 1, **characterised in that** first part (11) of the inflow base and second part (16) of the inflow base are designed such that a pressure loss is identical during flow through the two parts (11, 16) of the inflow base.

6. Device (4) according to Claim 1, **characterised in that** second part (16) of the inflow base has an at least partially horizontal alignment along longitudinal axis A-A of adapter connecting piece (3) or second part (16) of the inflow base is arranged at an angle (α) with longitudinal axis A-A of adapter connecting piece (3).

7. Device (4) according to Claim 1, **characterised in that** an end wall (20) and/or a side wall (18) of second part (16) of the inflow base has a sealing element (21), whereby side wall (18) of second part (16) of inflow base (11, 16) is appropriately at least partially sealed against an inner wall (15) of an adapter connecting piece housing (13) and/or an inner wall (22) of inlet (23) for the granulate in fluidisation unit (1) and/or end wall (20) of second part (16) of the inflow base is at least partially sealed against first part (11) of the inflow base arranged in fluidisation unit (1) and/or outlet (5) for the granulate produced.

8. Device (4) according to one of the preceding claims, **characterised in that** granulator (2) producing the granulate is embodied as an extruder, particularly preferred as a twin-screw extruder, or outlet (5) of granulator (2) is embodied as end (6) of the extruder screw or as ends (6) of the extruder screw.

9. Device (4) according to one of the preceding claims, **characterised in that** first part (11) of the inflow base arranged in fluidisation unit (1) can rotate around a vertical central axis Z of fluidisation unit (1).

10. Device (4) according to one of the preceding claims, **characterised in that** first part (16) of the inflow base arranged in fluidisation unit (1) has at least one first and one second inflow base plate (33), whereby first part (11) of the inflow base of fluidisation unit (1) appropriately has three inflow base plates (33).

11. Device (4) according to Claim 10, **characterised in that** one of inflow base plates (33) has or is a sealing element (34).

12. Method for producing and treating granulate, comprising
(a) a granulator (2) producing granulate with an outlet (5) for the granulate produced,
(b) a fluidisation unit (1) treating the granulate produced by granulator (2) with an inlet (23) for the granulate to be treated,
(c) an inflow base (11, 16) through which process air can flow, whereby granulator (2) is connected to inlet (23) for the granulate from fluidisation unit (1) to be treated such that outlet (5) of granulator (2) is adjacent to inflow base (11, 16) or is arranged above inflow base (11, 16), **characterised in that** granulator (2) is connected to fluidisation unit (1) through an adapter connecting piece (3) having a longitudinal axis A-A, whereby inflow base (11, 16) embodied in two parts is arranged in adapter connecting piece (3) and in fluidisation unit (1), whereby a first part (11) of the inflow base is arranged in fluidisation unit (1) and a second part (16) of the inflow base is arranged in adapter connecting piece (3), whereby a granulate is first produced by granulator (2) and the granulate produced is then fluidised on exiting granulator (2) by means of inflow base (11, 16) adjacent to outlet (5) of granulator (2) or inflow base (11, 16) arranged below outlet (5) of granulator (2), such that treatment of the granulate takes place.

13. Method according to Claim 12, **characterised in that** the method for producing and treating granulate is a continuous process.

14. Method according to Claim 12 or 13, **characterised in that** the device for producing and treating granulate is a device (4) according to one of Claims 1 to 11.

## Revendications

1. Dispositif (4) pour la fabrication et le traitement de granulat comprenant
(a) un granulateur (2) générant le granulat avec une sortie (5) pour le granulat généré,
(b) un appareil de fluidisation (1) traitant le granulat généré par le granulateur (2) avec une entrée (23) pour le granulat à traiter,
(c) un fond de soufflage (11, 16) pouvant être traversé par de l'air de processus,
dans lequel le granulateur (2) est relié à l'entrée (23) pour le granulat à traiter de l'appareil de fluidisation (1) de telle manière que la sortie (5) du granulateur (2) soit contiguë au fond de soufflage (11, 16) ou soit agencée au-dessus du fond de soufflage (11, 16), **caractérisé en ce que** le granulateur (2) est relié par le biais d'une tubulure d'adaptateur (3) présentant un axe longitudinal A-A à l'appareil de fluidisation (1), dans lequel le fond de soufflage (11, 16) réalisé en deux parties est agencé dans la tubulure d'adaptateur (3) et dans l'appareil de fluidisation (1), dans lequel une première partie (11) du fond de soufflage est agencée dans l'appareil de fluidisation (1) et une seconde partie (16) du fond de soufflage est agencée dans la tubulure d'adaptateur (3).

2. Dispositif (4) selon la revendication 1, **caractérisé en ce que** la première partie (11) du fond de soufflage fait partie de l'appareil de fluidisation (1).

3. Dispositif (4) selon la revendication 1, **caractérisé en ce que** la seconde partie (16) du fond de soufflage divise la tubulure d'adaptateur (3) au moins partiellement en une première chambre (17) et une seconde chambre (18).

4. Dispositif (4) selon la revendication 1, **caractérisé en ce que** la seconde partie (16) du fond de soufflage peut ou est traversée pour la fluidisation du granulat dans la zone de la tubulure d'adaptateur (3) par de l'air de processus de l'appareil de fluidisation (1).

5. Dispositif (4) selon la revendication 1, **caractérisé en ce que** la première partie (11) du fond de soufflage et la seconde partie (16) du fond de soufflage sont construites de telle manière qu'une perte de pression soit identique lors de la traversée des deux parties (11, 16) du fond d'afflux.

6. Dispositif (4) selon la revendication 1, **caractérisé en ce que** la seconde partie (16) du fond de soufflage présente une orientation au moins partiellement horizontale le long de l'axe longitudinal A-A de la tubulure d'adaptateur (3) ou la seconde partie (16) du fond de soufflage est agencée dans un angle (a) par rapport à l'axe longitudinal A-A de la tubulure d'adaptateur (3).

7. Dispositif (4) selon la revendication 1, **caractérisé en ce qu'**une paroi avant (20) et/ou paroi latérale (18) de la seconde partie (16) du fond de soufflage présente un élément étanche (21), dans lequel de manière appropriée, la paroi latérale (18) de la seconde partie (16) du fond de soufflage (11, 16) est rendue étanche au moins partiellement par rapport à une paroi intérieure (15) d'un boîtier de tubulure d'adaptateur (13) et/ou à une paroi intérieure (22) de l'entrée (23) pour le granulat dans l'appareil de fluidisation (1) et/ou la paroi avant (20) de la seconde partie (16) du fond de soufflage est rendue étanche au moins partiellement par rapport à la première partie (11) agencée dans l'appareil de fluidisation (1) du fond de soufflage et/ou la sortie (5) pour le granulat généré.

8. Dispositif (4) selon l'une des revendications précédentes, **caractérisé en ce que** le granulateur (2) générant le granulat est réalisé comme extrudeuse, de manière particulièrement préférée comme extrudeuse à double vis ou la sortie (5) du granulateur (2) est réalisée comme extrémité (6) de la vis d'extrudeuse ou comme des extrémités (6) de la vis d'extrudeuse.

9. Dispositif (4) selon l'une des revendications précédentes, **caractérisé en ce que** la première partie (11) agencée dans l'appareil de fluidisation (1) du fond de soufflage peut être tournée autour d'un axe médian vertical Z de l'appareil de fluidisation (1).

10. Dispositif (4) selon l'une des revendications précédentes, **caractérisé en ce que** la première partie (1) agencée dans l'appareil de fluidisation (1) du fond de soufflage présente au moins une première et une seconde plaque de fond de soufflage (33), dans lequel de manière appropriée, la première partie (11) du fond de soufflage de l'appareil de fluidisation (1) présente trois plaques de fond de soufflage (33).

11. Dispositif (4) selon la revendication 10, **caractérisé en ce qu'**une des plaques de fond de soufflage (33) présente ou réalise un élément étanche (34).

12. Procédé de fabrication et de traitement de granulat comprenant
(a) un granulateur (2) générant le granulat avec une sortie (5) pour le granulat généré,
(b) un appareil de fluidisation (1) traitant le granulat généré par le granulateur (2) avec une entrée (23) pour le granulat à traiter,
(c) un fond de soufflage (11, 16) pouvant être traversé par de l'air de processus,
dans lequel le granulateur (2) est relié à l'entrée (23) pour le granulat à traiter de l'appareil de fluidisation (1) de telle manière que la sortie (5) du granulateur (2) soit contiguë au fond de soufflage (11, 16) ou soit agencée au-dessus du fond de soufflage (11, 16), **caractérisé en ce que** le granulateur (2) est relié par le biais d'une tubulure d'adaptateur (3) présentant un axe longitudinal A-A à l'appareil de fluidisation (1), dans lequel le fond de soufflage (11, 16) réalisé en deux parties est agencé dans la tubulure d'adaptateur (3) et dans l'appareil de fluidisation (1), dans lequel une première partie (11) du fond de soufflage est agencée dans l'appareil de fluidisation (1) et une seconde partie (16) du fond de soufflage est agencée dans la tubulure d'adaptateur (3), dans lequel un granulat est tout d'abord généré par le granulateur (2) et ensuite le granulat généré est fluidisé lors de la sortie du granulateur (2) au moyen du fond de soufflage (11, 16) contigu à la sortie (5) du granulateur (2) ou du fond de soufflage (11, 16) agencé en dessous de la sortie (5) du granulateur (2) de sorte qu'un traitement du granulat soit effectué.

13. Procédé selon la revendication 12,
**caractérisé en ce que**
le procédé de fabrication et de traitement de granulat est un procédé continu.

14. Procédé selon l'une des revendications 12 ou 13,
**caractérisé en ce que**
le dispositif de fabrication et de traitement de granulat est un dispositif (4) selon l'une des revendications 1 à 11.
